# EUROPEAN PATENT SPECIFICATION

(11) **EP 3 518 441 B1**
(45) Date of publication and mention of the grant of the patent: **22.03.2023**
(21) Application number: 18153428.0
(22) Date of filing: 25.01.2018
(51) Int. Cl.: H04B 17/15, H04B 17/23

(54) **TEST TROUBLESHOOTING SYSTEM AND METHOD**
TESTFEHLERBEHEBUNGSSYSTEM UND VERFAHREN
SYSTÈME ET PROCÉDÉ DE DÉPANNAGE DE TEST

(43) Date of publication of application: 31.07.2019
(73) Proprietor: Rohde & Schwarz GmbH & Co. KG, 81671 München (DE)
(72) Inventor: EKAMBARAM, Prabhakaran, 768964 Singapore (SG); KHURANA, Hanush, 81827 Munich (DE)
(74) Representative: Isarpatent

(56) References cited:
- WO-A2-02/27340
- US-A1- 2006 111 873
- US-A1- 2014 236 527
- US-B1- 6 341 361

## Description

The invention relates to a test troubleshooting system and apparatus for automatic provision of test failure data used to identify and/or remedy testing faults in a test setup and to a method for automatic provision of test failure data.

US 2014/0236527 A1 describes a cloud based infrastructure for supporting protocol reconfigurations in protocol independent device testing systems.

The system is used for performing an automated test. The system comprises a system controller being communicatively coupled to at least one programmable tester module. The system controller comprises a memory having a test application stored therein. The system controller further comprises a test interface to connect to the at least one programmable tester module. The system controller further comprises a processor coupled to the memory and the test interface, wherein the processor is configured to operate in accordance with the test application to obtain a protocol selection for programming the at least one programmable tester module using a graphical user interface, access a configuration file associated with a protocol from a remote computer through a network, configure the at least one programmable tester module with a communication protocol for application to at least one device under test using the configuration file, wherein the at least one programmable tester module is operable to be communicatively coupled to the at least one device under test and to transmit instructions to the at least one programmable tester module for executing a program flow, wherein the program flow comprises a sequence of tests for testing the at least one device under test and to receive results from the programmable tester module associated with running the sequence of tests in the program flow on the at least one device under test.

Interaction between mobile devices and networks is a major requirement because users rely on the proper functioning of their mobile devices, in particular mobile phones. Careful and standard-compliant implementation of technologies in mobile devices is critical and requires testing of the equipment. Network operators have developed specific interoperability tests (IOT). The technical equipment or device under test can be tested in a test setup comprising at least one test and measurement device. The test and measurement device applies one or more test case scenarios to a device under test (DUT) such as a mobile phone to test its interoperability. Interoperability (IOT) testing involves complex configurations and a fitting test setup to successfully run the respective test scenario. However, often testing faults can occur due to a misconfiguration of the test setup and/or improper execution of the test case scenario. The test and measurement device of the test setup can provide log files during the test procedure. Conventionally, application engineers and customers performing the testing contact experts of the manufacturer of the test and measurement device equipment if errors occur during testing. The experts scrutinize the provided log files to suggest measures to overcome the observed test faults. Accordingly, the log files are evaluated manually based on the expert knowledge of a technical expert working in the support department of the test and measurement device manufacturer scrutinizing the log files handed over to him by the customer having performed the test procedure. Naturally, this fault handling is extremely cumbersome and timeconsuming as well as error-prone and the result depends on the individual expert knowledge and experience of the contacted expert. Consequently, the applied test procedures may take a very long time and involve a lot of resources of the customer and the test equipment manufacturer.

Accordingly, it is an object of the present invention to provide a system to reduce the time to identify and remedy testing faults involved in testing procedures.

This object is achieved according to a first aspect of the present invention by a test troubleshooting system comprising the features of claim 1.

The invention provides according to a first aspect a test troubleshooting system for automatic provision of test failure data used to identify and/or remedy testing faults in a test setup including at least one test and measurement device adapted to generate log files applied by the test and measurement device via a network to a troubleshooting device of said test troubleshooting system,
wherein the troubleshooting device comprises an analyzing unit adapted to analyze the received log files to identify testing faults in the test setup and a generation unit adapted to generate automatically test failure data for the identified testing faults transmitted by the troubleshooting device to said test and measurement device and/or to a user workstation.

In a possible embodiment of the test troubleshooting system according to the first aspect of the present invention, the test and measurement device is adapted to run predefined test case scenarios applied to one or more devices under test, DUT, connected to said at least one test and measurement device in said test setup by means of at least one DUT interface.

In a possible embodiment of the test troubleshooting system according to the first aspect of the present invention, the test and measurement device comprises a protocol tester adapted to perform protocol tests of protocols within different protocol layers of a protocol stack, wherein log files of messages exchanged between applied test case scenarios and the device under test, DUT, are generated.

In a further possible embodiment of the test troubleshooting system according to the first aspect of the present invention, the test and measurement device is adapted to generate automatically a log file for each applied test case scenario supplied via the network to said troubleshooting device.

In a further possible embodiment of the test troubleshooting system according to the first aspect of the present invention, the analyzing unit of the troubleshooting device is adapted to analyze the received log files to identify possible configuration failures of the applied test case scenarios.

In the test troubleshooting system according to the first aspect of the present invention, the analyzing unit of the troubleshooting device is adapted to search for patterns within the received log files.

In of the test troubleshooting system according to the first aspect of the present invention, the generation unit of the troubleshooting device is adapted to generate test failure data including information about the identified testing faults, information about failure correction of the identified testing faults and/or configuration parameters used to reconfigure the applied test case scenarios.

In a still further possible embodiment of the test troubleshooting system according to the first aspect of the present invention, the generation unit of the troubleshooting device is machine learned on the basis of training sets received from said analyzing unit of said troubleshooting device.

In a still further possible embodiment of the test troubleshooting system according to the first aspect of the present invention, the generation unit of the troubleshooting device comprises an artificial neural network.

In a still further possible embodiment of the test troubleshooting system according to the first aspect of the present invention, the troubleshooting device comprises a data storage which stores the log files received from the at least one test and measurement device of the test setup and the generated test failure data.

In a still further possible embodiment of the test troubleshooting system according to the first aspect of the present invention, the data storage of the troubleshooting device is accessible by different user workstations via the network according to an implemented access right management.

In a still further possible embodiment of the test troubleshooting system according to the first aspect of the present invention, the network comprises the internet, a wide area network, WAN, or a local area network, LAN.

In a still further possible embodiment of the test troubleshooting system according to the first aspect of the present invention, the at least one test and measurement device and/or the troubleshooting device comprises programming interfaces including a low level application programming interface, LLAPI, and a medium-level application programming interface, MLAPI.

In a still further possible embodiment of the test troubleshooting system according to the first aspect of the present invention, the generated test failure data is adapted to trigger automatically a software update of at least one test software component implemented in the test and measurement device of said test setup.

In a still further possible embodiment of the test troubleshooting system according to the first aspect of the present invention, the test case scenario applied to the device under test, DUT, by said test and measurement device is loaded from a library including a plurality of test case scenarios stored in a local memory of said test and measurement device or stored in a central database of said troubleshooting system.

In a further possible embodiment of the test troubleshooting system according to the first aspect of the present invention, the test case scenario applied to the device under test, DUT, by the test and measurement device has a source code which can be programmed by means of a programming interface of said test and measurement device.

In a further possible embodiment of the test troubleshooting system according to the first aspect of the present invention, the log file generated by the test and measurement device during application of a test case scenario comprises local configuration messages and/or protocol messages.

In a further possible embodiment of the test troubleshooting system according to the first aspect of the present invention, the device under test, DUT, interfaces provided between the device under test, DUT, and the test and measurement device of said test troubleshooting system comprise software interfaces, digital I/Q interfaces and/or RF interfaces.

In a further possible embodiment of the test troubleshooting system according to the first aspect of the present invention, the troubleshooting device comprises a graphical user interface, GUI.

In a further possible embodiment of the test troubleshooting system according to the first aspect of the present invention, the graphical user interface of the troubleshooting device includes a display unit adapted to display a sequence of messages within the received log files, a data structure of each message within the flow of messages and/or the message content of each message within the flow of messages.

In a further possible embodiment of the test troubleshooting system according to the first aspect of the present invention, the display unit of the graphical user interface, GUI, of the troubleshooting device is further adapted to display the associated test failure data, TFD, for the identified testing faults generated by the generation unit of said troubleshooting device.

The invention further provides a method for automatic provisions of test failure data comprising the features of claim 16.

In the following, possible embodiments of the test troubleshooting system according to the present invention are described in more detail with reference to the enclosed figures.
- Fig. 1: shows a block diagram of a possible exemplary embodiment of a test troubleshooting system according to the present invention;
- Fig. 2: shows a further block diagram for illustrating a possible exemplary embodiment of a test troubleshooting system according to the present invention;
- Fig. 3: shows a further block diagram for illustrating a possible exemplary embodiment of a troubleshooting device in a test troubleshooting system according to an aspect of the present invention.

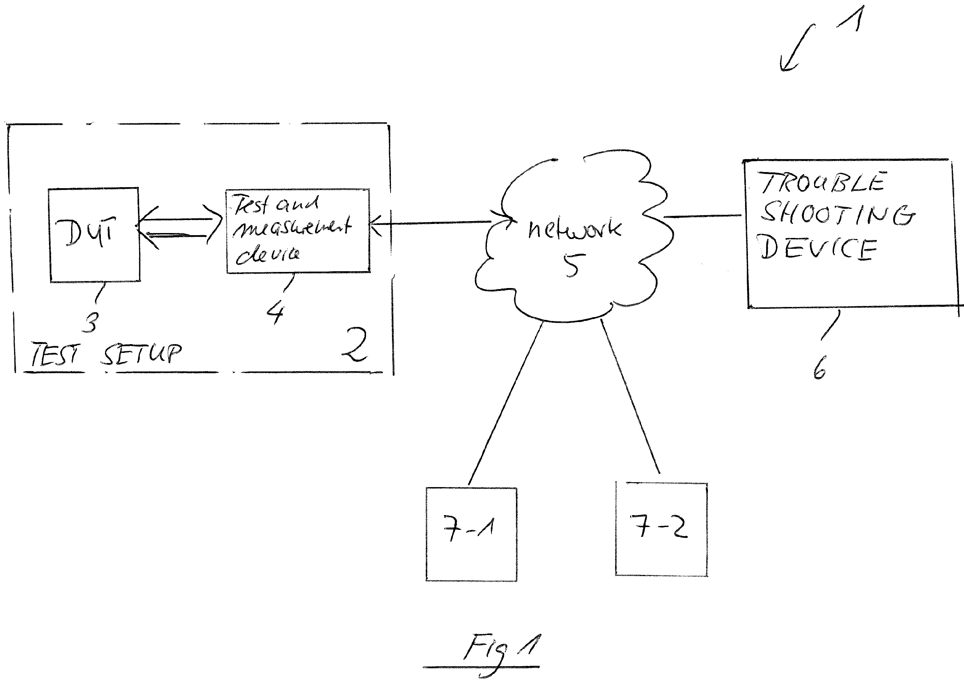

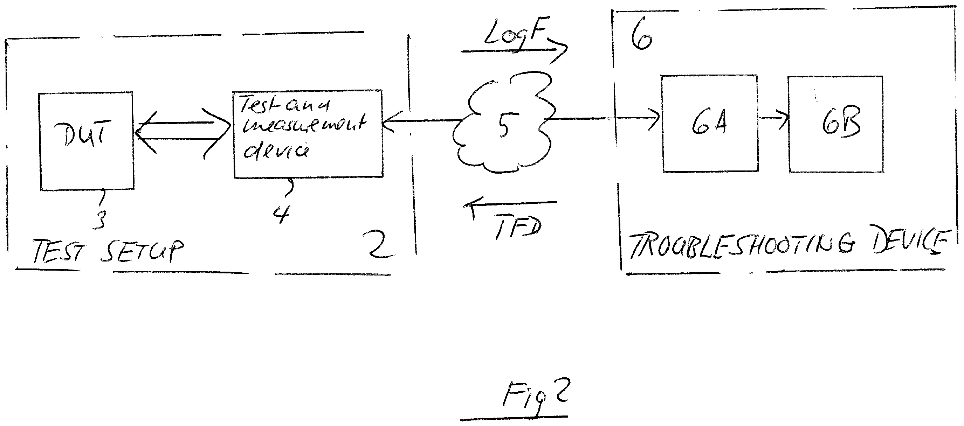

As can be seen in Fig. 1, a test troubleshooting system 1 according to an aspect of the present invention comprises in the illustrated embodiment a test setup 2 including at least one device under test OUT 3 which can be tested by means of a test and measurement device 4 of the test setup 2. The test and measurement device 4 of the test setup 2 can be connected to one or more devices under test OUT 3 by means of DUT interfaces as also illustrated in Fig. 1. The device under test 3 can be a mobile device under test such as a mobile phone. As illustrated in Fig. 1, the device under test 3 can communicate with the test and measurement device 4 of the test setup 2. The test and measurement device 4 comprises in a possible embodiment a protocol tester. The test and measurement device 4 is adapted to generate log files, LogF, which are supplied by the test and measurement device 4 via a network 5 to a troubleshooting device 6 of said test troubleshooting system 1. In the illustrated embodiment of Fig. 1, the test troubleshooting system 1 further comprises several user workstations 7-1, 7-2 of different users or customers. The troubleshooting device 6 comprises an interface to receive the log files, LogF, and an analyzing unit 6A and/or a generation unit 6B as also illustrated in the block diagram of Fig. 2. The analyzing unit 6A comprises at least one processor adapted to analyze the received log files LogF to identify testing faults in the test setup 2. Further, the generation unit 6B of the troubleshooting device 6 comprises a processor adapted to generate automatically test failure data TFD for the identified testing faults. The generated test failure data TFD can be output via the interface and transmitted by the troubleshooting device 6 to the test and measurement device 4 and/or to the user workstations 7-1, 7-2.

The test and measurement device 4 is adapted to run predefined test case scenarios TCS. These test case scenarios are applied to one or more devices under test OUT 3 such as a mobile phone connected to the at least one test and measurement device 4 of the test setup 2 by means of DUT interfaces. The test and measurement device 4 can generate automatically a log file for each applied test case scenario. The generated log file is supplied by the test and measurement device 4 via the network 5 to the troubleshooting device 6. The analyzing unit 6A of the troubleshooting device 6 is adapted to analyze the received log files LogF to identify possible configuration failures within the applied test case scenario TCS. The analyzing unit 6A of the troubleshooting device 6 searches for patterns within the received log files. The generation unit 6B of the troubleshooting device 6 generates test failure data TFD. The test failure data TFD includes information about the identified testing faults, information about failure correction of the identified testing faults and even configuration parameters which are used to reconfigure automatically the applied test case scenario TCS.

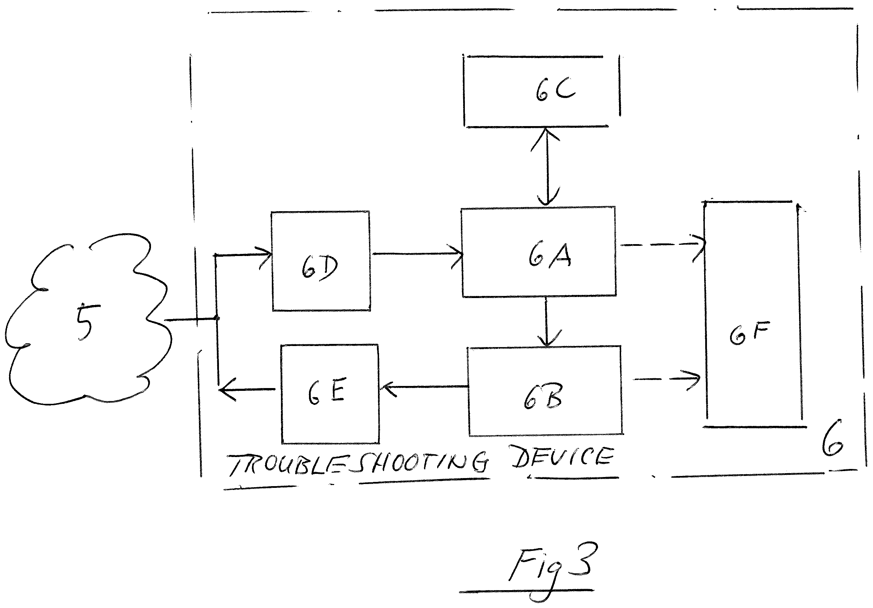

In a possible embodiment, the troubleshooting device 6 can comprise a generation unit 6B which is machine learned on the basis of training sets received from the analyzing unit 6A of the troubleshooting device 6. The generation unit 6B can in a possible implementation comprise an artificial neural network which can be trained on training sets received from the analyzing unit 6A. The artificial neural network can comprise a deep neural network. The troubleshooting device 6 can further comprise in a possible embodiment a data storage 6C as illustrated in the block diagram of Fig. 3. The data storage 6C can store in a possible embodiment the log files LogF received from the at least one test and measurement device 4 and the generated test failure data TFD. In a possible embodiment, the data storage 6C of the troubleshooting device 6 is accessible by different user workstations 7 via the network 5 according to an implemented access right management. The network 5 can comprise in a possible embodiment the internet. The network 5 can further comprise a wide area network WAN or a local area network LAN. In the illustrated embodiment of Fig. 3, the troubleshooting device 6 comprises a receive module 6D and a transmit module 6E. Via the receive module 6D, the troubleshooting device 6 receives the log files LogF from one or more test and measurement devices 4 used in the test setup 2. The transmit module 6E is used to transmit the generated test failure data TFD back to the test and measurement device 4 and/or to one or more user workstations 7.

In a possible embodiment, the generated test failure data TFD is adapted to trigger automatically a software update of at least one test software component implemented in the test and measurement device 4 of the test setup 2 to remedy observed testing faults. The test case scenarios TCS applied by the test and measurement device 4 to the device under test 3 can be loaded in a possible embodiment from a library including a plurality of test case scenarios. This library can be stored in a possible embodiment in a local memory of the test and measurement device 4. In a further alternative embodiment, the library including the plurality of test case scenarios can be stored in a central database of the test troubleshooting system 1. The test case scenario applied by the test and measurement device 4 to the device under test 3 comprises a source code which can be programmed in a possible embodiment by means of a programming interface of the test and measurement device 4. In a possible embodiment, the troubleshooting device 6 includes a programming interface for programming a source code of a test case scenario which is then stored in the central database of the troubleshooting system 1. The programmed test case scenario can be loaded by the test and measurement device 4 from the central database and then be applied to the device under test 3 within the test setup 2. The programming interfaces can comprise in a possible embodiment a low-level application programming interface LLAPI and a medium-level application programming interface MLAPI. The low-level application programming interface LLAPI provides direct access to different protocol layers. In a possible implementation, all protocol layers below are automatically configured from the contents of layer L3 messages. The test and measurement device 4 can perform protocol tests or protocols within different protocol layers of a protocol stack. Log files LogF of messages exchanged between the applied test case scenario and the device under test 3 are generated by the test and measurement device 4 and can be stored locally and/or supplied via the network 5 to the troubleshooting device 6. The log files generated by the test and measurement device 4 during application of the test case scenario can comprise local configuration messages and/or protocol messages. In a possible embodiment, individual protocol messages can be created by means of a message composer module of the programming interfaces. The programming interfaces provided in the troubleshooting device 6 and/or the test and measurement device 4 can be used to define test case scenarios comprising a source code, e.g. C++ source code. The log files, LogF, can comprise a predefined data structure and/or data format.

The signalling sequences required for protocol test case scenarios are performed in protocol layer L3 of the protocol stack or higher. In a possible embodiment, the MLAPI programming interface can be provided with a RRC configurator. The protocol data units PDUs of the peer-to-peer messages to the terminal unit can be used to automatically and uniformly configure lower protocol layers of the protocol stack. The provision of the MLAPI thus reduces the required programming efforts significantly. Consequently, a test case scenario can quite frequently be modified without having to change the source code or to recompile.

In a possible embodiment, a message composer can be used to modify the contents of all test case protocol messages. The message composer can make use of a message description database which can store the protocol messages including their content. In a possible embodiment, the protocol message sequences can be programmed and the corresponding contents of the protocol messages can be loaded from the message description database. The provision of a message composer can minimize programming efforts for modifying test case scenarios used to perform interoperability tests. Consequently, the testing times required to test terminal equipment, in particular terminal equipment used in mobile radio networks, can be reduced.

In the embodiment illustrated in Fig. 3, the troubleshooting device 6 comprises a graphical user interface 6F. The graphical user interface 6F can comprise a display unit adapted to display a sequence of messages within the received log files which may be stored in the data storage 6C. Further, the display unit can be used to display the data structure of each message within the received flow of messages and even the message content of each single message within the flow of messages. The display unit of the graphical user interface 6F of the troubleshooting device 6 can be further used to display the associated test failure data TFD for the identified testing faults generated by the generation unit 6B of the troubleshooting device 6.

The test and measurement device 4 of the test setup 2 can use different kinds of device under test DUT interfaces to test the wireless device under test 3. These interfaces can comprise software interfaces, digital I/O interfaces and/or RF interfaces. The software interface associated with the protocol software of the wireless device under test 3 is linked to a virtual physical layer. In contrast, the digital I/O interface connects the test and measurement device 4 to the base band unit of the device under test 3. The digital I/O data can be transmitted at variable speed compatible with other test and measurement devices 4 of the test setup 2. These test and measurement devices 4 can comprise for instance protocol testers, signal generators or signal analyzers.

As illustrated in Fig. 1, the troubleshooting device 6 can comprise a cloud-based troubleshooting device accessible via a network cloud 5. The different test setups 2 can be connected via the network 5 to a central troubleshooting device 6, in particular a remote troubleshooting device 6 implemented on a server. The troubleshooting device 6 can interact with the different test and measurement devices 4, in particular protocol testers. The troubleshooting device 6 can apply test failure data TFD to the test and measurement device 4 in case that testing failures in the test setup 2 are observed. This test failure data TFD can comprise configuration parameters which can be used to automatically reconfigure the applied test case scenario TCS if test faults have occurred.

In a possible embodiment, an application engineer of the customer performing a test procedure in the test setup 2 to test one or more devices under test 3 can switch its testing equipment, in particular the test and measurement device 4, from a normal test mode to an expert test mode after test faults have been observed. In the expert mode, the test and measurement device 4 does establish automatically link via the network 5 to the remote troubleshooting device 6 which may be implemented on a server. The troubleshooting device 6 provides in the expert mode suggestions to overcome observed testing faults. These suggestions can comprise information about the identified testing faults and information how a failure correction of the identified testing faults shall be done by the application engineer. Further, the suggestions can also include control data and/or configuration parameters which can be used to reconfigure the applied test case scenario to eliminate or reduce the testing faults. The generation of the test failure data TFD by the generation unit 6B of the remote troubleshooting device 6 can be performed in a possible embodiment online during runtime of the test procedure or offline after the test procedure has been finished. After the testing faults have been eliminated the test and measurement device 4 can be switched back from the expert mode to the normal testing mode.

The test and measurement device 4 can comprise a wideband radio communication tester adapted to apply test case scenarios for cellular and non-cellular standards. The test and measurement device 4 emulates the network operation under realistic conditions for protocol and RF tests. In a possible embodiment the troubleshooting device 6 performs automatically an error analysis and a root cause analysis if a testing fault is observed. The test and measurement device 4 can be used to perform layer L1 (physical) up to layer L3 and higher layers test as well as full protocol stack test including inter-RAT as well as multi cell tests.

The test troubleshooting system 1 according to the present invention facilitates test procedures, in particular interoperability tests thus reducing testing times prior to the introduction of new technologies and/or market launch of terminal equipment.

### REFERENCE SIGNS

- 1: test troubleshooting system
- 2: test setup
- 3: device under test
- 4: test and measurement device
- 5: network
- 6: troubleshooting device
- 6A: analyzing unit
- 6B: generation unit
- 7: user workstations

## Claims

1. A test troubleshooting system (1) for automatic provision of test failure data, TFD, used to identify and/or remedy testing faults in a test setup (2), the test troubleshooting system (1) including
a troubleshooting device (6); and
at least one test and measurement device (4) adapted to generate log files, LogF, supplied by said test and measurement device (4) via a network (5) to the troubleshooting device (6) of said test troubleshooting system (1),
wherein the troubleshooting device (6) comprises
an analyzing unit (6A) adapted to search for patterns in the received log and analyze the received log files, LogF, to identify testing faults in the test setup (2), and
a generation unit (6B) adapted to generate automatically test failure data, TFD, for the identified testing faults transmitted by the troubleshooting device (6) to said test and measurement device (4) and/or to a user workstation (7-1, 7-2) of said test troubleshooting system (1), wherein the test failure data, TFD, include information about the identified testing faults, information about failure correction of the identified testing faults and/or configuration parameters used to reconfigure automatically an applied test case scenario, TCS.

2. The test troubleshooting system according to claim 1 wherein the test and measurement device (4) is adapted to run predefined test case scenarios applied to one or more devices under test, DUT, (3) connected to said at least one test and measurement device (4) in said test setup (2) by means of at least one device under test, DUT, interface.

3. The test troubleshooting system according to claim 1 or 2 wherein the test and measurement device (4) comprises a protocol tester adapted to perform protocol tests of protocols within different protocol layers of a protocol stack,
wherein log files, LogF, including messages exchanged between the applied test case scenario and the device under test, DUT, (3) are generated.

4. The test troubleshooting system according to any of the preceding claims 1 to 3 wherein the test and measurement device (4) is adapted to generate automatically for each applied test case scenario log files, LogF, supplied via the network (5) to said troubleshooting device (6).

5. The test troubleshooting system according to any of the preceding claims 1 to 4 wherein the analyzing unit (6A) of said troubleshooting device (6) is adapted to analyze the received log files, LogF, to identify possible configuration failures within the applied test case scenarios.

6. The test troubleshooting system according to any of the preceding claims 1 to 5 wherein the analyzing unit (6A) of said troubleshooting device (6) is adapted to search for patterns within the received log files, LogF.

7. The test troubleshooting system according to any of the preceding claims 1 to 6 wherein the generation unit (6B) of the troubleshooting device (6) is adapted to generate test failure data, TFD, including information about the identified testing faults, information about failure correction of the identified testing faults and/or configuration parameters used to reconfigure the applied test case scenarios.

8. The test troubleshooting system according to any of the preceding claims 1 to 7 wherein the generation unit (6B) of the troubleshooting device (6) is machine learned on the basis of training sets received from said analyzing unit (6A) of said troubleshooting device (6), wherein the generation unit (6B) of the troubleshooting device (6) comprises an artificial neural network.

9. The test troubleshooting system according to any of the preceding claims 1 to 8 wherein the troubleshooting device (6) comprises a data storage (6C) which stores the log files, LogF, received from the at least one test and measurement device (4) of the test setup (2) and the generated test failure data, TFD, wherein the data storage (6C) of the troubleshooting device (6) is accessible by different user workstations (7-1, 7-2) via the network (5) according to an implemented access right management, wherein the network (5) comprises the internet, a wide area network, WAN, or a local area network, LAN.

10. The test troubleshooting system according to any of the preceding claims 1 to 9 wherein the at least one test and measurement device (4) and/or troubleshooting device (6) comprises programming interfaces including
a low level application programming interface, LLAPI, and
a medium-level application programming interface, MLAPI.

11. The test troubleshooting system according to any of the preceding claims 1 to 10 wherein the generated test failure data, TFD, is adapted to trigger automatically a software update of a test software component implemented in the test and measurement device (4) of said test setup (2).

12. The test troubleshooting system according to any of the preceding claims 1 to 11 wherein the test case scenario applied to the device under test, DUT, (3) by said test and measurement device (4) is loaded from a library including a plurality of test case scenarios stored in a local memory of said test and measurement device (4) or stored in a central database of said troubleshooting system (1) or wherein a source code of the test case scenario applied to the device under test, DUT, (3) by the test and measurement device (4) is programmed individually by means of a programming interface of said test and measurement device (4) or by means of a programming interface of said troubleshooting device (6).

13. The test troubleshooting system according to any of the preceding claims 1 to 12 wherein the log file generated by the test and measurement device (4) during application of the test case scenario comprises local configuration messages and/or protocol messages.

14. The test troubleshooting system according to any of the preceding claims 1 to 13 wherein the device under test, DUT, interfaces between the device under test, DUT, (3) and the test and measurement device (4) of said test troubleshooting system (1) comprise software interfaces, digital I/O interfaces and RF interfaces.

15. The test troubleshooting system according to any of the preceding claims 1 to 14 wherein the troubleshooting device (6) comprises a graphical user interface, GUI, (6F) including a display unit adapted to display the sequence of messages within the received log files, the data structure of each message within the flow of messages and/or the message content of each individual message within the flow of messages and is further adapted to display the associated test failure data, TFD, for the identified testing faults generated by the generation unit (6B) of said troubleshooting device (6).

16. A method for automatic provision of test failure data, TFD, used to identify and/or remedy testing faults in a test setup (2) of a test troubleshooting, wherein the method comprising the steps of:
(a) generating log files, LogF, by at least one test and measurement device (4) of a test setup (2) supplied via a network (5) to a troubleshooting device (6);
(b) searching for patterns in the log files, LogF, and analyzing the log files, LogF, by said troubleshooting device (6) to identify testing faults in the test setup (2); and
(c) generating automatically test failure data, TFD, for the identified testing faults transmitted by said troubleshooting device (6) to said test and measurement device (4) and/or to a user work station (7-1, 7-2), wherein the test failure data, TFD, include information about the identified testing faults, information about failure correction of the identified testing faults and/or configuration parameters used to reconfigure automatically an applied test case scenario, TCS.

17. An apparatus for provision of test failure data, TFD, used to identify and/or remedy testing faults in a test setup (2), the apparatus (6) comprising:
an analyzing unit (6A) adapted to search for patterns in received log files, LogF, and analyze the received log files, LogF, from at least one test and measurement device (4) of a test setup (2) to identify testing faults in the test setup (2); and
a generator unit (6B) adapted to generate automatically test failure data, TFD, for the identified testing faults transmitted to said test and measurement device (4) and/or to a user workstation (7-1, 7-2),
wherein the test failure data, TFD, include information about the identified testing faults, information about failure correction of the identified testing faults and/or configuration parameters used to reconfigure automatically an applied test case scenario, TCS.

## Patentansprüche

1. Testfehlersuchsystem (1) für eine automatische Bereitstellung von Testfehlschlagsdaten, TFD, die verwendet werden, um Testfehler in einem Testaufbau (2) zu identifizieren und/oder zu beheben, wobei das Testfehlersuchsystem (1) Folgendes beinhaltet
eine Fehlersuchvorrichtung (6); und
mindestens eine Test- und Messvorrichtung (4), die angepasst ist, Protokolldateien, LogF, zu erzeugen, die von der Test- und Messvorrichtung (4) via ein Netzwerk (5) der Fehlersuchvorrichtung (6) des Testfehlersuchsystems (1) übergeben werden,
wobei die Fehlersuchvorrichtung (6) Folgendes umfasst
eine Analyseeinheit (6A), die angepasst ist, im empfangenen Protokoll nach Mustern zu suchen und die empfangenen Protokolldateien, LogF, zu analysieren, um Testfehler im Testaufbau (2) zu identifizieren, und
eine Erzeugungseinheit (6B), die angepasst ist, für die identifizierten Testfehler, die von der Fehlersuchvorrichtung (6) zur Test- und Messvorrichtung (4) und/oder zu einer Benutzerarbeitsstation (7-1, 7-2) des Testfehlersuchsystems (1) übertragen werden, automatisch Testfehlschlagsdaten, TFD, zu erzeugen, wobei die Testfehlschlagsdaten, TFD, Informationen über die identifizierten Testfehler, Informationen über eine Fehlschlagskorrektur der identifizierten Testfehler und/oder Auslegungsparameter, die zum automatischen Neuauslegen eines angewendeten Testfallszenarios, TCS, verwendet werden, beinhalten.

2. Testfehlersuchsystem nach Anspruch 1, wobei die Testund Messvorrichtung (4) angepasst ist, mittels mindestens einer Schnittstelle für eine zu testende Vorrichtung, DUT, ein vordefiniertes Testfallszenario umzusetzen, das von einer oder mehreren zu testenden Vorrichtungen, DUT, (3) angewendet wird, die mit der mindestens einen Test- und Messvorrichtung (4) im Testaufbau (2) verbunden sind.

3. Testfehlersuchsystem nach Anspruch 1 oder 2, wobei die Test- und Messvorrichtung (4) einen Protokolltester umfasst, der angepasst ist, in verschiedenen Protokollschichten eines Protokollstapels Protokolltests durchzuführen,
wobei Protokolldateien, LogF, erzeugt werden, die Nachrichten beinhalten, die zwischen dem angewendeten Testfallszenario und der zu testenden Vorrichtung, DUT, (3) ausgetauscht werden.

4. Testfehlersuchsystem nach einem der vorhergehenden Ansprüche 1 bis 3, wobei die Test- und Messvorrichtung (4) angepasst ist, für jedes angewendete Testfallszenario automatisch Protokolldateien, LogF, zu erzeugen, die via das Netzwerk (5) an die Fehlersuchvorrichtung (6) übergeben werden.

5. Testfehlersuchsystem nach einem der vorhergehenden Ansprüche 1 bis 4, wobei die Analyseeinheit (6A) der Fehlersuchvorrichtung (6) angepasst ist, die empfangenen Protokolldateien, LogF, zu analysieren, um mögliche Auslegungsfehlschläge in den angewendeten Testfallszenarios zu identifizieren.

6. Testfehlersuchsystem nach einem der vorhergehenden Ansprüche 1 bis 5, wobei die Analyseeinheit (6A) der Fehlersuchvorrichtung (6) angepasst ist, in den empfangenen Protokolldateien, LogF, nach Mustern zu suchen.

7. Testfehlersuchsystem nach einem der vorhergehenden Ansprüche 1 bis 6, wobei die Erzeugungseinheit (6B) der Fehlersuchvorrichtung (6) angepasst ist, Testfehlschlagsdaten, TFD, zu erzeugen, die Informationen über die identifizierten Testfehler, Informationen über eine Fehlschlagskorrektur der identifizierten Testfehler und/oder Auslegungsparameter, die zum Neuauslegen der angewendeten Testfallszenarios verwendet werden, beinhalten.

8. Testfehlersuchsystem nach einem der vorhergehenden Ansprüche 1 bis 7, wobei die Erzeugungseinheit (6B) der Fehlersuchvorrichtung (6) auf Basis von Trainingssätzen, die von der Analyseeinheit (6A) der Fehlersuchvorrichtung (6) empfangen werden, maschinengelernt ist, wobei die Erzeugungseinheit (6B) der Fehlersuchvorrichtung (6) ein künstliches neuronales Netzwerk umfasst.

9. Testfehlersuchsystem nach einem der vorhergehenden Ansprüche 1 bis 8, wobei die Fehlersuchvorrichtung (6) einen Datenspeicher (6C) umfasst, in dem die Protokolldateien, LogF, die von der mindestens einen Test- und Messvorrichtung (4) des Testaufbaus (2) empfangen werden, und die erzeugten Testfehlschlagsdaten, TFD, gespeichert sind, wobei verschiedene Benutzerarbeitsstationen (7-1, 7-2) via das Netzwerk (5) gemäß einer implementierten Zugriffsrechtsverwaltung auf den Datenspeicher (6C) der Fehlersuchvorrichtung (6) zugegriffen können, wobei das Netzwerk (5) das Internet, ein Weitbereichsnetzwerk, WAN, oder ein lokales Netzwerk, LAN, umfasst.

10. Testfehlersuchsystem nach einem der vorhergehenden Ansprüche 1 bis 9, wobei die mindestens eine Test- und Messvorrichtung (4) und/oder die Fehlersuchvorrichtung (6) Programmierschnittstellen umfassen, die Folgendes beinhalten
eine Low-Level-Anwendungsprogrammierschnittstelle, LLAPI, und
eine Medium-Level-Anwendungsprogrammierschnittstelle, MLAPI.

11. Testfehlersuchsystem nach einem der vorhergehenden Ansprüche 1 bis 10, wobei die erzeugten Testfehlschlagsdaten, TFD, angepasst sind, eine Softwareaktualisierung einer Testsoftwarekomponente, die in der Test- und Messvorrichtung (4) des Testaufbaus (2) implementiert ist, automatisch auszulösen.

12. Testfehlersuchsystem nach einem der vorhergehenden Ansprüche 1 bis 11, wobei das Testfallszenario, das von der Test- und Messvorrichtung (4) auf die zu testende Vorrichtung, DUT, (3) angewendet wird, aus einer Bibliothek geladen wird, die eine Vielzahl von Testfallszenarios beinhaltet, die in einem lokalen Speicher der Test- und Messvorrichtung (4) gespeichert sind oder in einer zentralen Datenbank des Fehlersuchsystems (1) gespeichert sind, oder wobei ein Quellcode des Testfallszenarios, das von der Test- und Messvorrichtung (4) auf die zu testende Vorrichtung, DUT, (3) angewendet wird, mittels einer Programmierschnittstelle der Test- und Messvorrichtung (4) oder mittels einer Programmierschnittstelle der Fehlersuchvorrichtung (6) einzeln programmiert wird.

13. Testfehlersuchsystem nach einem der vorhergehenden Ansprüche 1 bis 12, wobei die Protokolldatei, die von der Testund Messvorrichtung (4) während der Anwendung des Testfallszenarios erzeugt wird, lokale Auslegungsnachrichten und/oder Protokollnachrichten umfasst.

14. Testfehlersuchsystem nach einem der vorhergehenden Ansprüche 1 bis 13, wobei die Schnittstellen für eine zu testende Vorrichtung, DUT, zwischen der zu testenden Vorrichtung, DUT, (3) und der Test- und Messvorrichtung (4) des Testfehlersuchsystems (1) Softwareschnittstellen, digitale I/Q-Schnittstellen und RF-Schnittstellen umfassen.

15. Testfehlersuchsystem nach einem der vorhergehenden Ansprüche 1 bis 14, wobei die Fehlersuchvorrichtung (6) eine grafische Benutzerschnittstelle, GUI, (6F) umfasst, die eine Anzeigeeinheit beinhaltet, die angepasst ist, die Sequenz von Nachrichten in den empfangenen Protokolldateien, die Datenstruktur von jeder Nachricht im Fluss von Nachrichten und/oder den Nachrichteninhalt jeder einzelnen Nachricht im Fluss von Nachrichten anzuzeigen, und ferner angepasst ist, die verknüpften Testfehlschlagsdaten, TFD, für die identifizierten Testfehler, die von der Erzeugungseinheit (6B) der Fehlersuchvorrichtung (6) erzeugt werden, anzuzeigen.

16. Verfahren zur automatischen Bereitstellung von Testfehlschlagsdaten, TFD, das verwendet wird, um Testfehler in einem Testaufbau (2) einer Testfehlersuche zu identifizieren und/oder zu beheben, wobei das Verfahren die folgenden Schritte umfasst:
(a) Erzeugen von Protokolldateien, LogF, durch mindestens eine Test- und Messvorrichtung (4) eines Testaufbaus (2), die via ein Netzwerk (5) an eine Fehlersuchvorrichtung (6) übergeben werden;
(b) Suchen nach Mustern in den Protokolldateien, LogF, und Analysieren der Protokolldateien, LogF, durch die Fehlersuchvorrichtung (6), um Testfehler im Testaufbau (2) zu identifizieren; und
(c) automatisches Erzeugen von Testfehlschlagsdaten, TFD, für die identifizierten Testfehler, die von der Fehlersuchvorrichtung (6) zur Test- und Messvorrichtung (4) und/oder zu einer Benutzerarbeitsstation (7-1, 7-2) übertragen werden, wobei die Testfehlschlagsdaten, TFD, Informationen über die identifizierten Testfehler, Informationen über eine Fehlschlagskorrektur der identifizierten Testfehler und/oder Auslegungsparameter, die zum automatischen Neuauslegen eines angewendeten Testfallszenarios, TCS, verwendet werden, beinhalten.

17. Einrichtung zur Bereitstellung von Testfehlschlagsdaten, TFD, die verwendet werden, um Testfehler in einem Testaufbau (2) zu identifizieren und/oder zu beheben, wobei die Einrichtung (6) Folgendes umfasst:
eine Analyseeinheit (6A), die angepasst ist, in empfangenen Protokolldateien, LogF, nach Mustern zu suchen und die empfangenen Protokolldateien, LogF, von mindestens einer Testund Messvorrichtung (4) eines Testaufbaus (2) zu analysieren, um Testfehler im Testaufbau (2) zu identifizieren; und
eine Erzeugungseinheit (6B), die angepasst ist, für die identifizierten Testfehler, die zur Test- und Messvorrichtung (4) und/oder zu einer Benutzerarbeitsstation (7-1, 7-2) übertragen werden, automatisch Testfehlschlagsdaten, TFD, zu erzeugen,
wobei die Testfehlschlagsdaten, TFD, Informationen über die identifizierten Testfehler, Informationen über eine Fehlschlagskorrektur der identifizierten Testfehler und/oder Auslegungsparameter, die zum automatischen Neuauslegen eines angewendeten Testfallszenarios, TCS, verwendet werden, beinhalten.

## Revendications

1. Système de dépannage (1) de test pour la fourniture automatique de données de défaillance de test, TFD, utilisées pour identifier et/ou remédier à des défauts de test dans un montage de test (2), le système de dépannage (1) de test comportant
un dispositif de dépannage (6) ; et
au moins un dispositif de test et de mesure (4) adapté pour générer des fichiers de journal, LogF, fournis par ledit dispositif de test et de mesure (4) via un réseau (5), au dispositif de dépannage (6) dudit système de dépannage (1) de test,
dans lequel le dispositif de dépannage (6) comprend
une unité d'analyse (6A) adaptée pour rechercher des motifs dans le journal reçu et analyser les fichiers de journal, LogF, reçus, pour identifier des défauts de test dans le montage de test (2), et
une unité de génération (6B) adaptée pour générer automatiquement des données de défaillance de test, TFD, pour les défauts de test identifiés transmis par le dispositif de dépannage (6) audit dispositif de test et de mesure (4) et/ou à un poste de travail d'utilisateur (7-1, 7-2) dudit système de dépannage (1) de test, dans lequel les données de défaillance de test, TFD, comportent des informations sur les défauts de test identifiés, des informations sur une correction de défaillance des défauts de test identifiés et/ou des paramètres de configuration utilisés pour reconfigurer automatiquement un scénario de cas de test appliqué, TCS.

2. Système de dépannage de test selon la revendication 1, dans lequel le dispositif de test et de mesure (4) est adapté pour exécuter des scénarios de cas de test prédéfinis appliqués à un ou plusieurs dispositifs sous test, DUT, (3) connectés audit au moins un dispositif de test et de mesure (4) dans ledit montage de test (2) au moyen d'au moins une interface de dispositif sous test, DUT.

3. Système de dépannage de test selon la revendication 1 ou 2 dans lequel le dispositif de test et de mesure (4) comprend un testeur de protocole adapté pour réaliser des tests de protocole de protocoles dans différentes couches de protocole d'une pile de protocoles,
dans lequel des fichiers de journal, LogF, comportant des messages échangés entre le scénario de cas de test appliqué et le dispositif sous test, DUT, (3) sont générés.

4. Système de dépannage de test selon l'une quelconque des revendications précédentes 1 à 3 dans lequel le dispositif de test et de mesure (4) est adapté pour générer automatiquement, pour chaque scénario de cas de test appliqué, des fichiers de journal, LogF, fournis via le réseau (5) audit dispositif de dépannage (6).

5. Système de dépannage de test selon l'une quelconque des revendications précédentes 1 à 4, dans lequel l'unité d'analyse (6A) dudit dispositif de dépannage (6) est adaptée pour analyser les fichiers de journal, LogF, reçus, pour identifier les défaillances de configuration possibles dans les scénarios de cas de test appliqués.

6. Système de dépannage de test selon l'une quelconque des revendications précédentes 1 à 5, dans lequel l'unité d'analyse (6A) dudit dispositif de dépannage (6) est adaptée pour rechercher des motifs dans les fichiers de journal, LogF, reçus.

7. Système de dépannage de test selon l'une quelconque des revendications précédentes 1 à 6, dans lequel l'unité de génération (6B) du dispositif de dépannage (6) est adaptée pour générer des données de défaillance de test, TFD, comportant des informations sur les défauts de test identifiés, des informations sur une correction de défaillance des défauts de test identifiés et/ou des paramètres de configuration utilisés pour reconfigurer les scénarios de cas de test appliqués.

8. Système de dépannage de test selon l'une quelconque des revendications précédentes 1 à 7, dans lequel l'unité de génération (6B) du dispositif de dépannage (6) est apprise par machine sur la base d'ensembles d'entraînement reçus à partir de ladite unité d'analyse (6A) dudit dispositif de dépannage (6), dans lequel l'unité de génération (6B) du dispositif de dépannage (6) comprend un réseau neuronal artificiel.

9. Système de dépannage de test selon l'une quelconque des revendications précédentes 1 à 8, dans lequel le dispositif de dépannage (6) comprend un stockage de données (6C) qui stocke les fichiers de journal, LogF, reçus à partir de l'au moins un dispositif de test et de mesure (4) du montage de test (2) et les données de défaillance de test, TFD, générées, dans lequel le stockage de données (6C) du dispositif de dépannage (6) est accessible par différents postes de travail d'utilisateur (7-1,7-2) via le réseau (5) selon une gestion des droits d'accès mise en oeuvre, dans lequel le réseau (5) comprend l'Internet, un réseau étendu, WAN ou un réseau local, LAN.

10. Système de dépannage de test selon l'une quelconque des revendications précédentes 1 à 9, dans lequel l'au moins un dispositif de test et de mesure (4) et/ou dispositif de dépannage (6) comprend des interfaces de programmation comportant une interface de programmation d'application de bas niveau, LLAPI, et une interface de programmation d'application de niveau moyen, MLAPI.

11. Système de dépannage de test selon l'une quelconque des revendications précédentes 1 à 10, dans lequel les données de défaillance de test, TFD, générées sont adaptées pour déclencher automatiquement une mise à jour logicielle d'un composant logiciel de test mis en œuvre dans le dispositif de test et de mesure (4) dudit montage de test (2).

12. Système de dépannage de test selon l'une quelconque des revendications précédentes 1 à 11, dans lequel le scénario de cas de test appliqué au dispositif sous test, DUT, (3) par ledit dispositif de test et de mesure (4) est chargé à partir d'une bibliothèque comportant une pluralité de scénarios de cas de test stockés dans une mémoire locale dudit dispositif de test et de mesure (4) ou stockés dans une base de données centrale dudit système de dépannage (1) ou dans lequel un code source du scénario de cas de test appliqué au dispositif sous test, DUT, (3) par le dispositif de test et de mesure (4) est programmé individuellement au moyen d'une interface de programmation dudit dispositif de test et de mesure (4) ou au moyen d'une interface de programmation dudit dispositif de dépannage (6).

13. Système de dépannage de test selon l'une quelconque des revendications précédentes 1 à 12, dans lequel le fichier de journal généré par le dispositif de test et de mesure (4) pendant l'application du scénario de cas de test comprend des messages de configuration locale et/ou des messages de protocole.

14. Système de dépannage de test selon l'une quelconque des revendications précédentes 1 à 13 dans lequel les interfaces de dispositif sous test, DUT, entre le dispositif sous test, DUT, (3) et le dispositif de test et de mesure (4) dudit système de dépannage (1) de test comprennent des interfaces logicielles, des interfaces I/Q numériques et des interfaces RF.

15. Système de dépannage de test selon l'une quelconque des revendications précédentes 1 à 14, dans lequel le dispositif de dépannage (6) comprend une interface utilisateur graphique, GUI, (6F) comportant une unité d'affichage adaptée pour afficher la séquence de messages dans les fichiers de journal reçus, la structure de données de chaque message dans le flux de messages et/ou le contenu de message de chaque message individuel dans le flux de messages, et est en outre adaptée pour afficher les données de défaillance de test, TFD, associées pour les défauts de test identifiés générés par l'unité de génération (6B) dudit dispositif de dépannage (6).

16. Procédé pour la fourniture automatique de données de défaillance de test, TFD, utilisées pour identifier et/ou remédier à des défauts de test dans un montage de test (2) d'un dépannage de test, dans lequel le procédé comprend les étapes consistant à :
(a) générer des fichiers de journal, LogF, par au moins un dispositif de test et de mesure (4) d'un montage de test (2), fournis via un réseau (5) à un dispositif de dépannage (6) ;
(b) rechercher des motifs dans les fichiers de journal, LogF, et analyser les fichiers de journal, LogF, par ledit dispositif de dépannage (6) pour identifier des défauts de test dans le montage de test (2) ; et
(c) générer automatiquement des données de défaillance de test, TFD, pour les défauts de test identifiés transmis par ledit dispositif de dépannage (6) audit dispositif de test et de mesure (4) et/ou à un poste de travail d'utilisateur (7-1, 7-2), dans lequel les données de défaillance de test, TFD, comportent des informations sur les défauts de test identifiés, des informations sur une correction de défaillance des défauts de test identifiés et/ou des paramètres de configuration utilisés pour reconfigurer automatiquement un scénario de cas de test appliqué, TCS.

17. Appareil pour fournir des données de défaillance de test, TFD, utilisées pour identifier et/ou remédier à des défauts de test dans un montage de test (2), l'appareil (6) comprenant :
une unité d'analyse (6A) adaptée pour rechercher des motifs dans des fichiers de journal, LogF, reçus, et analyser les fichiers de journal, LogF, reçus, à partir d'au moins un dispositif de test et de mesure (4) d'un montage de test (2) pour identifier des défauts de test dans le montage de test (2) ; et
une unité de générateur (6B) adaptée pour générer automatiquement des données de défaillance de test, TFD, pour les défauts de test identifiés transmis audit dispositif de test et de mesure (4) et/ou à un poste de travail d'utilisateur (7-1, 7-2),
dans lequel les données de défaillance de test, TFD, comportent des informations sur les défauts de test identifiés, des informations sur une correction de défaillance des défauts de test identifiés et/ou des paramètres de configuration utilisés pour reconfigurer automatiquement un scénario de cas de test appliqué, TCS.
